# EUROPEAN PATENT SPECIFICATION

(11) **EP 4 245 509 B1**
(45) Date of publication and mention of the grant of the patent: **16.07.2025**
(21) Application number: 22161769.9
(22) Date of filing: 14.03.2022
(51) Int. Cl.: B29C 70/44, B29C 70/54, B29C 70/34

(54) **MOLD ASSEMBLY FOR MANUFACTURING A COMPOSITE PART AND RELATED METHODS**
FORMZUSAMMENBAU ZUR HERSTELLUNG EINES VERBUNDMATERIALTEILS UND ZUGEHÖRIGE VERFAHREN
ENSEMBLE MOULE DE FABRICATION D'UNE PIÈCE COMPOSITE ET PROCÉDÉS ASSOCIÉS

(43) Date of publication of application: 20.09.2023
(73) Proprietor: LM Wind Power A/S, 6000 Kolding (DK)
(72) Inventor: BAEK, Peter, 7300 Jelling (DK); SCHIBSBYE, Karsten, 7000 Fredericia (DK); VAN MALKENHORST, Bjarke Brisson, 6000 Kolding (DK)
(74) Representative: Bardehle Pagenberg S.L.

(56) References cited:
- KR-A- 20120 077 539
- US-B2- 8 672 665

## Description

### FIELD

The present disclosure relates to methods and systems for manufacturing a composite part. Further, the present disclosure also relates to a placement head for manufacturing composite parts.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. The larger size of the blades introduces higher physical loads into the blade and related components. Wind turbine rotor blades generally comprise a body shell formed by two shell halves made of a composite material e.g. glass fiber reinforced composites.

The body shell is relatively lightweight and has structural properties that are not designed to withstand the bending moments and other loads acting on the blade during operation. To improve the structural properties of the rotor blade such as stiffness and strength, the blade is generally reinforced with structural components, e.g. one or more spar caps at the suction and pressure side of the blade with a shear web connecting them. Such a spar cap may also be called a "main laminate" or a "spar cap laminate" of a wind turbine blade. These terms may be used interchangeably throughout the present disclosure.

Spar caps and other composites can be manufactured using several materials such as glass fiber composites and carbon fiber composites. Modern spar caps are generally manufactured using pultruded plates. Pultruded plates are generally bonded together in a resin infused process to form a composite part such as spar cap.

US 8 672 665 B2 discloses fluid transfer and evacuation structures formed in a vacuum bag operable for use in vacuum-assisted resin transfer molding, debulking, compaction, or similar processes. Fiber rovings represent an interesting alternative to pultruded composites due to a reduced material cost. Further, the use of fiber rovings allows for a more tailored fiber placement than when using pultrusion plates.

In order to achieve a high-quality end product, it is important for fibers to stay in their correct position after placement in the mold. Rovings in particular are less stable than e.g. fiber pultrusion plates, i.e. rovings tend to accumulate on portions of the mold surface with a reduced local slope. Restraining the displacement of the fibers laid in a mold surface is a challenging task. Known approaches to limit the displacement of fiber mats or rovings include the use of vacuum systems. These systems generally use a vacuum bag surrounding the fiber rovings and mold surface during roving placement. Further, these systems require the use of placement heads working under vacuum conditions for laying rovings. Vacuum conditions may be difficult to maintain in such large and multi-component systems with moving parts and openings for feeding the rovings. To assure vacuum is maintain during composite manufacturing these vacuum systems require frequent maintenance. Further, such systems are relatively complex and have poor versatility.

The present disclosure provides examples of systems and methods that at least partially overcome some of the drawbacks of existing approaches.

### SUMMARY

In a first aspect, a mold assembly for manufacturing composite parts comprising fibers and resin is provided as defined in claim 9.

According to this first aspect, the mold assembly allows laying fibers (e.g. rovings) in a mold, while at the same time it restrains the movement of the laid fibers. This is achieved by maintaining a certain tension on the pliable sheet, which can be achieved by locally opening and closing the pliable sheet. Further, the mold assembly restrains the displacement of the fibers in a passive manner, i.e. the mold assembly does not require activation to restrain the displacement of the fibers. Besides, the fact that the pliable sheet is configured to be opened and closed locally allows introducing fibers of different dimensions into a space delimited by the mold and the pliable sheet. Additionally, this mold assembly reduces maintenance and other expenses associated with systems based on the use of vacuum.

In another aspect but not according to the invention, a placement head for laying fibers is provided. The placement head is configured for laying fibers on a mold through a pliable sheet. The placement head comprises a guide element and a shoe. The guide element is configured to guide the fibers to a mold; and the shoe is configured to contact the pliable sheet. Further, the shoe is also configured to open and close the pliable sheet locally. Thus, the shoe defines an open area in the pliable sheet through which the fibers are laid in the mold.

According to this aspect, the placement head allows opening and closing the pliable sheet and provides an open area to lay further fibers without substantially modifying the overall tension in the pliable sheet. Thus, the placement head promotes an efficient laying process wherein portions of the fibers that are not below the placement head are substantially unaffected by the addition of material.

In yet another aspect, a method for manufacturing a composite part comprising fibers and resin is provided as defined in claim 1. The method comprises laying fibers in a mold. Besides, the method comprises covering the laid fibers and the mold with a pliable sheet to restrain movement of the laid fibers. Additionally, the method includes at least partially uncovering the laid fibers or the mold; and laying additional fibers.

According to this aspect, the method allows laying fibers in a mold and restrain the movement of the same in a simple and yet reliable manner. Besides, the method allows the further laying of fibers without substantially affecting the positioning of the previously laid fiber. This may be performed at a plurality of instances, i.e. to provide several layers of fibers at different locations in the mold. This method reduces the complexity of known approaches considerably and makes the manufacturing process more efficient. Further, since even rovings can be efficiently used and these can be tailored at will, the method promotes the manufacture of more tailored composite parts.

Throughout this disclosure, the terms "pultruded composites", "pultruded plates", "pultrusions" or similar terms are generally used to define reinforced materials (e.g. fibers or woven or braided strands) that are impregnated with a resin and pulled through a heated die such that the resin cures.

The term "roving" is generally used to define any fibrous or filamentous structure such as a yarn, i.e. monofilament yarn or multifilament yarn, in which the fiber(s)/filament(s) run at least a portion of the whole length of the structure. Further, such fibrous or filamentous structure may be pre-impregnated with a resin, such as a thermoplastic polymer resin. Additionally, the fibrous or filamentous structure may be a woven fiber with filaments orientated in more than one direction, such as a biaxial fiber.

A "fiber mat" may herein be regarded as a piece of cloth or fabric comprising fibers. The fibers may have a variety of different orientations e.g. the fiber mats may be uniaxial, biaxial, multi-axial or different. The fibers may be woven with different types of weaves or may be unwoven. The fiber mats may comprise fibers in other arrangements, i.e. stitched fibers, flattened strands with adhesives to improve fiber mat integrity, and others.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a molding system which may be used in the manufacture of a wind turbine blade;
Figure 3 schematically illustrates a mold assembly according to one example;
Figure 4 schematically illustrates a cross-section view of another example of a mold assembly;
Figure 5 schematically illustrates a placement head according to one example;
Figure 6 is a flow diagram of a method for manufacturing a composite part according to one example.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

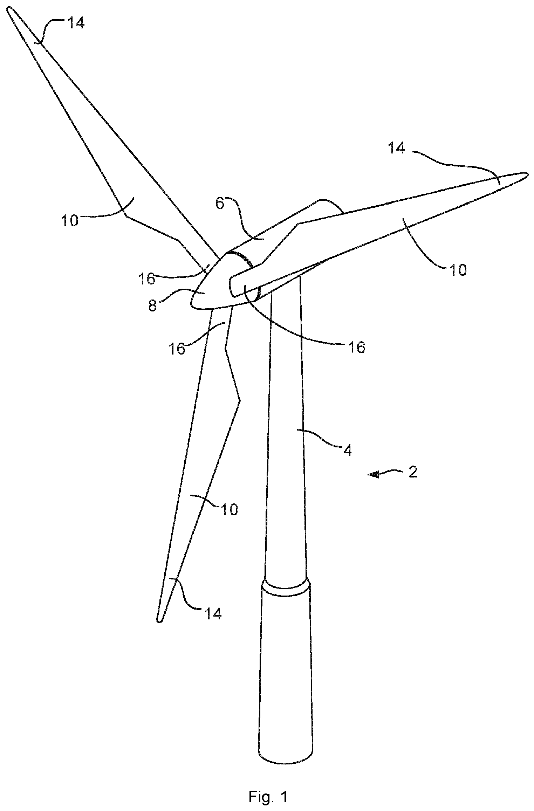

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

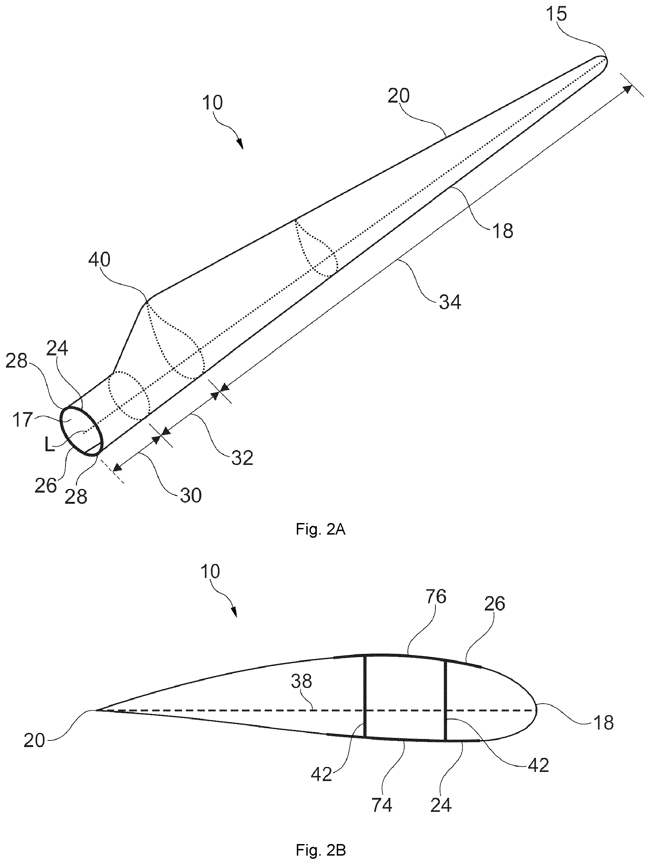

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an exemplary wind turbine blade 10, e.g. a cross-sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

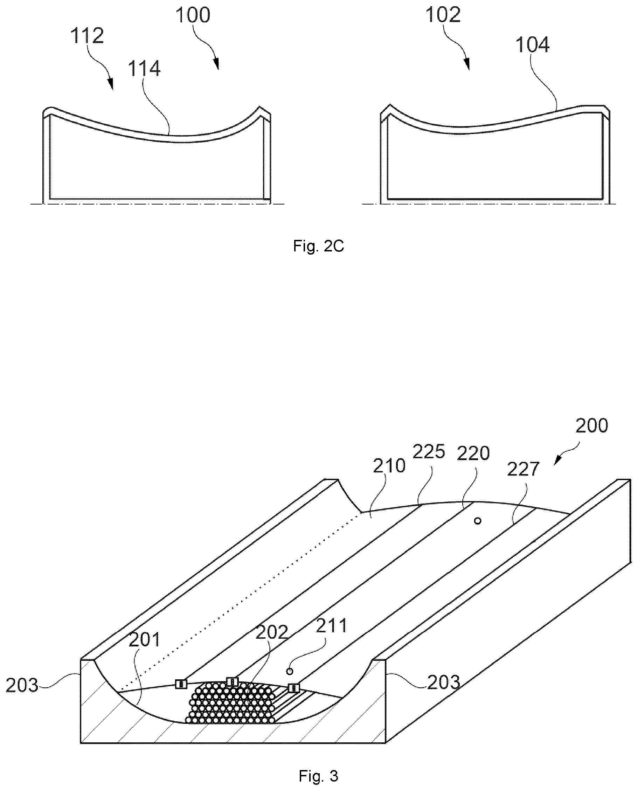

Fig. 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the pressure side). The second mold 112 is configured for manufacturing a second blade shell part of the wind turbine blade, such as a downwind shell part of the wind turbine blade (forming the suction side). The mold system 100 also comprises mold surfaces 104, 114 for depositing fibers.

Figure 3 schematically illustrates a perspective view of a portion of a mold assembly 200 for manufacturing composite parts according to one example. The composite parts comprise fibers 202 and resin to bond the fibers 202 together. The mold assembly 200 comprises a mold surface 201 and a pliable sheet 210. The mold surface 201 extends in a longitudinal direction and in a transverse direction. Further, the mold surface defines lateral end walls 203 that delimit the mold surface 201 in the transverse direction.

The pliable sheet 210 is configured to be connected to the mold surface 201 between the lateral end walls 203. The pliable sheet 210 is configured to be opened and closed locally so that the fibers 202 can be laid in the mold. Additionally, the pliable sheet 210 is also configured to restrain movement of the laid fibers 202.

Opening and closing "locally" is to be understood herein that only a portion of the pliable sheet is opened at the same time, and not over the entire length of the pliable sheet. E.g. a local opening at any given moment may extend over less than 20% of the total length of the mold, and optionally less than 15% or less than 10% or less than 5% of the total length of the mold.

As illustrated in figure 3, the pliable sheet 210 may be connected to the mold surface 201 at or near a top part of the mold surface 201 or in a lower part of the mold surface 201 depending on the specifications of the composite part. In figure 3, the connection between the pliable sheet 210 and the mold surface 201 has been illustrated with a broken line.

In the illustrated example, rovings 202 are used as fiber material. Rovings 202 are more easily moved than other fiber materials after their placement in the mold. With examples of the present disclosure, rovings 202 can be effectively used. Rovings used in this manner can provide a significant cost reduction and offers possibilities of tailoring the strength and stiffness to a large extent.

In the present example, when the height of the layers of rovings 202 exceeds the height at which the pliable sheet 210 is connected to the mold surface 201, the pliable sheet 210 will exert a pressure on the laid rovings 202 towards the mold surface 201. This pressure promotes a secure placement of the rovings 202 and reduces the risk of fiber misalignment or motion during manufacturing. Further, as the pliable sheet 210 can be opened locally, additional rovings 202 may be laid, without substantially reducing the overall pressure acting on the majority of the rovings 202. When opening the pliable sheet locally, significant movement of the rovings may still be avoided, along the entire length of the mold or almost the entire length of the mold.

In examples, the pliable sheet 210 at least partially seals the mold surface 201. This may allow using the pliable sheet 210 as an interface for a vacuum system to infuse the rovings 202 with the resin, specifically after all rovings have been positioned in the mold. Further, the pliable sheet 210 may be made of an elastic material. More specifically, the pliable sheet may comprise synthetic rubbers, and more specifically it may comprise ethylene and/or propylene.

Besides, the pliable sheet 210 comprises a mechanism allowing locally opening and closing the pliable sheet such as e.g. a zip lock 225, a hook and loop fastener 227 (e.g. Velcro ^{™}) or a zipper 220 extending along a longitudinal direction of the mold surface. Combinations of the aforementioned elements are also possible, as schematically illustrated in figure 3. In some examples, the pliable sheet 210 may comprise a plurality of said elements or combinations of the same, as for example 3 or more zippers, specifically 5 of more zippers and more specifically 8 or more zippers.

In some examples, the pliable sheet 210 may comprise at least one opening 211 configured to introduce resin into a space delimited by the pliable sheet 210 and the mold surface 201. In examples, the openings 211 may be configured to be connected to a vacuum system to infuse resin, e.g. in a VARTM process (Vacuum Assisted Resin Transfer Molding).

In other examples, a vacuum bag may be used to infuse resin to the rovings 202. In this case, the vacuum bag may be laid on top of the pliable sheet (if this is sufficiently permeable) or it may be laid directly on top of the rovings 202.

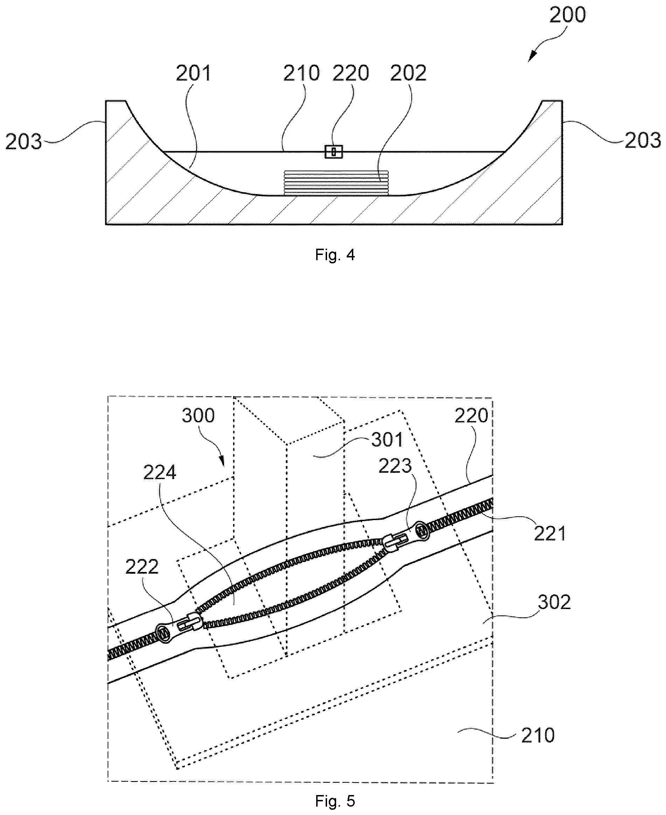

Figure 4 illustrates a cross-section of another example of a mold assembly 200 according to the present disclosure. Note that the mold assembly 200 in figure 4 has been illustrated with a rounded mold surface 201, but other types of mold surfaces 201 could also be employed. Similarly, the pliable sheet 210 may be connected to the mold surface at different heights. In fact, in examples, the connection between the pliable sheet 210 and the mold surface 201 may be configured to be displaced along the surface of the mold surface, i.e. using guides or other connection means. This enables maintaining a certain level of pressure acting on the fibers 202 during the manufacturing process, e.g. as the height of the rovings increases the connection point between the pliable sheet 210 and the mold surface 201 may be displaced to compensate the increase in height of the fibers 202. Note that for illustrative purposes the fibers 202 do not reach the heigh of the pliable sheet 210 in the figure. Further, the fibers 202 in this example are woven fibers, i.e. uniaxial or biaxial fiber mats, extending within a 2D plane. Other types of fibers, as for example fiber yarns extending substantially in only one dimensions or fiber pultrusions could also be employed.

As illustrated, the pliable sheet 210 may comprise a zipper 220 to locally open and close the pliable sheet 210. Depending on specifications of the composite part to be manufactured, the zipper 220 may be orientated at an angle relative to the longitudinal direction of the mold surface 201. Thus, the fibers 202 may be laid at an angle and the mechanical properties of the composite part may be tailored. The fibers 202 may comprise glass fiber, carbon fiber, aramid fibers and others suitable fibers. Further, the fibers 202 may comprise fibers that have been previously impregnated with resin, such as prepregs comprising fibers impregnated with epoxy resin, polyester resin, vinylester resin or other suitable resins.

The zipper 220 of the pliable sheet 210 comprises a chain and two sliders arranged in a head-to-head configuration (also known as O-type configuration). This configuration of the sliders allows creating an open area between the sliders, with one of them opening the chain and the other one of them closing the chain. This feature will be discussed in more detail in relation with figure 5. Note that a similar effect could also be achieved with other type of openable connections such as zip-locks and hook and loop fasteners.

Figure 5 schematically shows a mold assembly 200 comprising a placement head 300 according to an example of the present disclosure. The placement head 300 is illustrated in combination with a zipper 220 comprising a chain 221 and two sliders 222, 223. The placement head 300 of the mold assembly may be configured for connecting with the two sliders 222, 223 so that one slider 222 opens the chain 221, and the other slider 223 closes the chain 221 as the placement head moves. Thus, an open area 224 to access the mold or mold surface 201 between the two sliders 222, 223 can be defined. Additionally, the placement head 300 may also be configured for laying the fibers 202 through said open area 224 and along the longitudinal direction. Note that if the motion of the placement head 300 is reverse, the opening and closing of the chain 221 would be performed by the other slider 222, 223.

In another aspect, figure 5 also discloses a placement head 300 according to an example of the present disclosure. The placement head 300 is configured for laying fibers 202 in a mold (not illustrated) through a pliable sheet 210. The placement head 300 comprises a guide element 301 and a shoe 302. The guide element 301 is configured to guide the fibers in a mold (not illustrated). The shoe 302 is configured to contact the pliable sheet 210. Further, the shoe 302 is also configured to open and close the pliable sheet 210 locally. Thus, the shoe 302 defines an open area 224 through which the fibers are laid in the mold. The placement head 300 in figure 5 has been illustrated with broken lines not to obstruct the view of the zipper 220 below.

The fibers 202 may be particularly rovings or fiber mats.

The shoe 302 may include fastening elements to connect with the sliders 222, 223 of the zipper 220. The fastening elements may be configured to connect with sliders of a zip-lock, or it may include other type of connections configured to open and close a hook and loop type fastener. The shoe 302 may be dimensioned such as to allow fibers 202 of different widths to pass through the open area 224, i.e. woven fibers extending within a 2D plane, fiber yarns extending along a longitudinal direction, or other type of fibers.

In figure 5, the guide element 301 has been illustrated as a closed duct through which the fibers are fed to the mold, but other type of guide elements may be also employed for this task. Additionally, the guide element 301 may include a drive that controls the amount or number of fibers that is laid in the mold during the displacement of the placement head 300 along the mold surface.

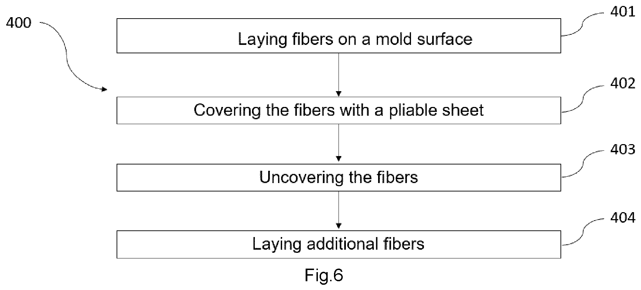

Figure 6 is a flow diagram of a method 400 for manufacturing a composite part comprising fibers 202 and resin according to the present disclosure. The method 400 comprises, at block 401, laying fibers 202 in a mold 201. Further, the method 400 also comprises, at block 402, covering the laid fibers 202 and the mold surface 201 with a pliable sheet 210 to restrain movement of the laid fibers 202. Besides, the method 400 also comprises, at block 403, at least partially uncovering the laid fibers 202 or the mold surface 201 and laying 404 additional fibers 202.

In some examples, the pliable sheet 210 used in method 400 may be at least partially openable. Further, the step 403 of at least partially uncovering the laid fibers 202 or the mold surface 201 may comprise opening at least a portion of the pliable sheet 210 locally for the laying 404 of the additional fibers 202. Besides, the opening of at least a portion of the pliable sheet 210 may be performed at least partially automatically, i.e. by sliding at least one slider 222, 223 of the zipper 220 or the zip-lock 225 using a placement head 300 or other automatic systems.

In examples, laying 401 fibers 202, and covering 402 the laid fibers 202 and the mold surface 201 is performed using a placement head 300. Further, the placement head 300 may also perform the subsequent opening a portion of the pliable or sheet 210 (or uncovering 403 the laid fibers 202) and laying 404 additional fibers 202.

Additionally, the pliable sheet 210 may be made of an elastic material such as the length of the pliable sheet 210 may be modified when the pliable sheet 210 exerts pressure against the fibers 202.

In further examples, the method 400 further comprises at least partially sealing off the laid fibers 202 and infusing the laid fibers 202 with resin. The sealing off and the infusing may be performed using the pliable sheet 210. This allows maintaining pressure always acting on the fibers, e.g. rovings and considerably reduces the risk of misalignment before resin infusion. The infusion of resin may include one of resin injection and applying vacuum, e.g. in a VARTM process (Vacuum Assisted Resin Transfer Molding).

Note that some of the technical features described in relation with the mold assembly 200 and placement head 300 may be included in the method 400 for manufacturing a composite part, and *vice versa.*

This written description uses examples to disclose the present teaching, including the preferred embodiments, and also to enable any person skilled in the art to practice it, including making and using any devices or systems and performing any incorporated methods. The patentable scope is defined by the claims. If reference signs related to drawings are placed in parentheses in a claim, they are solely for attempting to increase the intelligibility of the claim, and shall not be construed as limiting the scope of the claim.

## Claims

1. A method (400) for manufacturing a composite part comprising fibers (202) and resin, the method (400) comprising:
laying (401) fibers (202) in a mold;
covering (402) the laid fibers (202) and a mold surface (201) with a pliable sheet (210) to restrain movement of the laid fibers (202);
at least partially uncovering (403) the laid fibers (202) in the mold; and
laying (404) additional fibers (202).

2. The method (400) according to claim 1, wherein the pliable sheet (210) is at least partially openable, and at least partially uncovering (403) comprises opening at least a portion of the pliable sheet (210) locally for the laying (404) of the additional fibers (202).

3. The method (400) according to any of claims 1 and 2, wherein the method further comprises at least partially sealing off the laid fibers (202), and infusing the laid fibers (202) with resin.

4. The method (400) according to any of claims 1 - 3, wherein the sealing off and the infusing is performed using the pliable sheet (210).

5. The method (400) according to any of claims 1 - 4, wherein the pliable sheet (210) comprises a zip-lock (225) and/or a zipper (220).

6. The method (400) according to any of claims 2 - 5, wherein opening at least a portion of the pliable sheet (210) is performed at least partially automatically by sliding at least one slider (222, 223) of the zip-lock (225) or zipper (220).

7. The method (400) according to any of claims 1 - 6, wherein the fibers (202) are fiber rovings.

8. The method (400) according to any of claims 1 - 7, wherein the composite part is a spar cap of a wind turbine blade.

9. A mold assembly (200) for manufacturing composite parts comprising fibers (202) and resin, the mold assembly (200) comprising:
a mold surface (201) extending in a longitudinal direction and in a transverse direction and a mold (220) defining lateral end walls (203) delimiting the mold surface (201) in the transverse direction,
a pliable sheet (210) configured to be connected to the mold surface (201) between the lateral end walls (203), wherein the pliable sheet (210) is configured to be opened and closed locally to define an open area in the pliable sheet through which fibers (202) can be laid in the mold, and wherein the pliable sheet (210) is also configured to restrain movement of the laid fibers (202),
wherein the pliable sheet (210) comprises at least one zipper (220) extending along a longitudinal direction of the mold surface (201),
wherein the zipper (220) comprises a chain (221) and two sliders (222, 223) arranged in a head-to-head configuration.

10. The mold assembly (200) according to claim 9, wherein the mold assembly (200) further comprises a placement head (300) to lay the fibers (202), and optionally wherein the fibers (202) are rovings.

11. The mold assembly (200) according to any of claims 9 and 10, wherein the pliable sheet (210) comprises a zip-lock or a hook and loop fastener extending along a longitudinal direction of the mold surface (201).

12. The mold assembly (200) according to any of claims 9 - 11, wherein the placement head (300) is configured for connecting with the two sliders (222, 223) so that one slider (222) opens the chain (221), and the other slider (223) closes the chain (221), defining an open area (224) to access the mold surface (201) between the two sliders (222, 223), and wherein the placement head (300) is also configured for laying the fibers (202) through said open area (224) and along the longitudinal direction.

13. The mold assembly (200) according to any of claims 9 - 12, wherein the pliable sheet (210) at least partially seals off the mold surface (201), and wherein the pliable sheet (210) comprises openings (211) configured to introduce resin into a space delimited by the pliable sheet (210) and the mold surface (201).

## Patentansprüche

1. Verfahren (400) zur Herstellung eines Verbundstoffteils mit Fasern (202) und Harz, wobei das Verfahren (400) umfasst:
Legen (401) von Fasern (202) in eine Form;
Abdecken (402) der gelegten Fasern (202) und einer Formoberfläche (201) mit einer biegsamen Folie (210), um die Bewegung der gelegten Fasern (202) einzuschränken;
zumindest teilweises Freilegen (403) der gelegten Fasern (202) in der Form; und
Legen (404) von zusätzlichen Fasern (202).

2. Verfahren (400) nach Anspruch 1, wobei die biegsame Folie (210) zumindest teilweise geöffnet werden kann und das zumindest teilweise Freilegen (403) ein lokales Öffnen zumindest eines Teils der biegsamen Folie (210) zum Legen (404) der zusätzlichen Fasern (202) umfasst.

3. Verfahren (400) nach einem der Ansprüche 1 und 2, wobei das Verfahren ferner das zumindest teilweise Abdichten der gelegten Fasern (202) und das Infundieren der gelegten Fasern (202) mit Harz umfasst.

4. Verfahren (400) nach einem der Ansprüche 1 bis 3, wobei das Abdichten und das Infundieren unter Verwendung der biegsamen Folie (210) durchgeführt wird.

5. Verfahren (400) nach einem der Ansprüche 1 bis 4, wobei die biegsame Folie (210) einen Ziplock (225) und/oder einen Reissverschluss (220) umfasst.

6. Verfahren (400) nach einem der Ansprüche 2 bis 5, wobei das Öffnen zumindest eines Teils der biegsamen Folie (210) zumindest teilweise automatisch durch Verschieben zumindest eines Schiebers (222, 223) des Ziplocks (225) oder des Reißverschlusses (220) erfolgt.

7. Verfahren (400) nach einem der Ansprüche 1 bis 6, wobei die Fasern (202) Faserrovings sind.

8. Verfahren (400) nach einem der Ansprüche 1 bis 7, wobei das Verbundteil eine Holmkappe eines Windturbinenblatts ist.

9. Eine Formanordnung (200) zur Herstellung von Verbundwerkstoffteilen, die Fasern (202) und Harz umfassen, wobei die Formanordnung (200) umfasst:
eine Formoberfläche (201), die sich in einer Längsrichtung und in einer Querrichtung erstreckt, und eine Form (220), die seitliche Endwände (203) definiert, die die Formoberfläche (201) in der Querrichtung begrenzen,
eine biegsame Folie (210), die so konfiguriert ist, dass sie mit der Formoberfläche (201) zwischen den seitlichen Endwänden (203) verbunden ist, wobei die biegsame Folie (210) so konfiguriert ist, dass sie lokal geöffnet und geschlossen werden kann, um einen offenen Bereich in der biegsamen Folie zu definieren, durch den Fasern (202) in die Form gelegt werden können, und wobei die biegsame Folie (210) auch so konfiguriert ist, dass sie die Bewegung der gelegten Fasern (202) einschränkt,
wobei die biegsame Folie (210) mindestens einen Reißverschluss (220) aufweist, der sich entlang einer Längsrichtung der Formoberfläche (201) erstreckt,
wobei der Reißverschluss (220) eine Kette (221) und zwei Schieber (222, 223) umfasst, die in einer Kopf-an-Kopf-Konfiguration angeordnet sind.

10. Formanordnung (200) nach Anspruch 9, wobei die Formanordnung (200) ferner einen Platzierungskopf (300) zum Ablegen der Fasern (202) umfasst, und wobei die Fasern (202) optional Rovings sind.

11. Formanordnung (200) nach einem der Ansprüche 9 und 10, wobei die biegsame Folie (210) einen Ziplock oder einen Klettverschluss umfasst, der sich entlang einer Längsrichtung der Formoberfläche (201) erstreckt.

12. Formanordnung (200) nach einem der Ansprüche 9 - 11, wobei der Platzierungskopf (300) so konfiguriert ist, dass er mit den beiden Schiebern (222, 223) verbunden wird, so dass ein Schieber (222) die Kette (221) öffnet und der andere Schieber (223) die Kette (221) schließt, wodurch ein offener Bereich (224) für den Zugang zur Formoberfläche (201) zwischen den beiden Schiebern (222, 223) definiert wird, und wobei der Platzierungskopf (300) auch so konfiguriert ist, dass er die Fasern (202) durch den offenen Bereich (224) und entlang der Längsrichtung legt.

13. Formanordnung (200) nach einem der Ansprüche 9- 12, wobei die biegsame Folie (210) die Formoberfläche (201) zumindest teilweise abdichtet und wobei die biegsame Folie (210) Öffnungen (211) aufweist, die so konfiguriert sind, dass sie Harz in einen Raum einführen, der durch die biegsame Folie (210) und die Formoberfläche (201) begrenzt ist.

## Revendications

1. Procédé (400) de fabrication d'une pièce composite comprenant des fibres (202) et de la résine, le procédé (400) comprenant :
déposer (401) des fibres (202) dans un moule ;
recouvrir (402) les fibres déposées (202) et la surface du moule (201) d'une feuille souple (210) pour limiter le mouvement des fibres posées (202) ;
découvrir au moins partiellement (403) les fibres déposées (202) dans le moule ; et
déposer (404) des fibres supplémentaires (202).

2. Procédé (400) selon la revendication 1, dans lequel la feuille souple (210) est au moins partiellement ouvrable, découvrir au moins partiellement (403) comprend l'ouverture d'au moins une partie de la feuille souple (210) localement pour déposer (404) des fibres supplémentaires (202).

3. Procédé (400) selon l'une des revendications 1 et 2, dans lequel le procédé consiste en outre à sceller au moins partiellement les fibres étendues (202) et à infuser les fibres étendues (202) avec de la résine.

4. Procédé (400) selon l'une des revendications 1 à 3, dans lequel le scellement et l'infusion sont effectués à l'aide de la feuille souple (210).

5. Procédé (400) selon l'une des revendications 1 à 4, dans laquelle la feuille souple (210) comprend une fermeture à ziploc (225) et/ou une fermeture à glissière (220).

6. Procédé (400) selon l'une des revendications 2 à 5, dans lequel l'ouverture d'au moins une partie de la feuille souple (210) est effectuée au moins partiellement automatiquement en faisant glisser au moins un curseur (222, 223) de la fermeture à ziploc (225) ou de la fermeture à glissière (220).

7. Procédé (400) selon l'une des revendications 1 à 6, dans lequel les fibres (202) sont des mèches de fibres.

8. Procédé (400) selon l'une des revendications 1 à 7, dans lequel la pièce composite est un capuchon de longeron d'une pale d'éolienne.

9. Ensemble de moule (200) pour la fabrication de pièces composites comprenant des fibres (202) et de la résine, l'assemblage de moule (200) comprenant :
une surface de moule (201) s'étendant dans une direction longitudinale et dans une direction transversale et un moule (220) définissant des parois d'extrémité latérales (203) délimitant la surface de moule (201) dans la direction transversale,
une feuille pliable (210) configurée pour être reliée à la surface du moule (201) entre les parois d'extrémité latérales (203), dans laquelle la feuille pliable (210) est configurée pour être ouverte et fermée localement afin de définir une zone ouverte dans la feuille pliable à travers laquelle les fibres (202) peuvent être déposées dans le moule, et dans laquelle la feuille pliable (210) est également configurée pour restreindre le mouvement des fibres posées (202),
dans laquelle la feuille souple (210) comprend au moins une fermeture à glissière (220) s'étendant le long d'une direction longitudinale de la surface du moule (201),
la fermeture éclair (220) comprend une chaîne (221) et deux curseurs (222, 223) disposés dans une configuration tête à tête.

10. L'ensemble de moule (200) selon la revendication 9, dans lequel l'ensemble de moule (200) comprend en outre une tête de placement (300) pour déposer les fibres (202), et éventuellement dans lequel les fibres (202) sont des rovings.

11. L'ensemble de moule (200) selon l'une des revendications 9 et 10, dans lequel la feuille souple (210) comprend une fermeture à ziploc ou une fermeture auto-agrippante s'étendant le long d'une direction longitudinale de la surface du moule (201).

12. L'ensemble de moule (200) selon l'une des revendications 9- 11, dans lequel la tête de placement (300) est configurée pour se connecter aux deux curseurs (222, 223) de sorte qu'un curseur (222) ouvre la chaîne (221), et l'autre curseur (223) ferme la chaîne (221), définissant une zone ouverte (224) pour accéder à la surface du moule (201) entre les deux curseurs (222, 223), et dans lequel la tête de placement (300) est également configurée pour déposer les fibres (202) à travers ladite zone ouverte (224) et le long de la direction longitudinale.

13. L'ensemble de moule (200) selon l'une des revendications 9- 12, dans lequel la feuille pliable (210) scelle au moins partiellement la surface du moule (201), et dans lequel la feuille pliable (210) comprend des ouvertures (211) configurées pour introduire de la résine dans un espace délimité par la feuille pliable (210) et la surface du moule (201).
